# EUROPEAN PATENT APPLICATION

(11) **EP 1 383 261 A1**
(43) Date of publication of application: **21.01.2004**
(21) Application number: 02360212.1
(22) Date of filing: 15.07.2002
(51) Int. Cl.: H04J 3/16, H04Q 11/04

(54) **Protection method and system for traffic of different service classes**

(71) Applicant: ALCATEL, 75008 Paris (FR)
(72) Inventor: Körber, Wolfgang, 70329 Stuttgart (DE); Dembeck, Lars, 71032 Böblingen (DE)
(74) Representative: Urlichs, Stefan, Dipl.-Phys.

(57) **Abstract**

According to an M:1 protection scheme protection of different traffic streams is distributed over several protection paths in a way, that low priority traffic is protected by means of equipment with less capacity and/or higher outage probability and vice versa. A primary network path or connection carries at least M traffic streams with M>1, wherein each of the M traffic streams belongs to a different service class having a different priority. The primary network path or connection is protected by M rather than only 1 redundant protection paths or connection, which are ranked according to their capacity and/or reliability. In the case of a failure of the first network path/connection, the M traffic streams are redirected over the M redundant network paths/connections in a way that traffic streams with a higher service class are carried by redundant network paths or connection with higher rank and traffic streams with a lower service class are carried by redundant network paths or connections with lower rank.

## Description

### Field of the Invention

The present invention relates to the field of telecommunications and more particularly to a protection method in a transmission network for traffic of different service classes having different priorities.

### Background of the Invention

Transmission networks serve for the transport of user signals, commonly referred to as tributary signals, in the form of multiplexed transmission signals. A transmission network consists of a number a physically interconnected network elements such as add/drop multiplexers, terminal multiplexers, crossconnects, routers and line equipment. The physical interconnection between two network elements is referred to as section while the route a certain tributary takes through the network is referred to as path.

A synchronous transmission system known as SDH (Synchronous Digital Hierarchy) or SONET (Synchronous Optical Network), which is based on time-division multiplexing, is specified in ITU-T G.707 (10/2000). Another transmission network which is based on wavelength-division multiplexing, is specified in ITU-T G.709 (02/2001). ITU-T G.872 describes the architecture of optical transport networks including protection and restoration mechanisms.

ITU-T G.8080describes the architecture for the automatically switched optical network (ASON). The aforementioned ITU-T recommendations are incorporated by reference herein.

A very basic aspect in transmission networks is the availability of service. Hence, in transmission networks, the network itself or the combination of network and network management needs to provide the means and facilities to ensure sufficient availability. Typically, such network mechanisms are distinguished in protection and restoration. The principle of both is to redirect traffic of a failed connection over a spare connection. Restoration stands for network management interaction to determine an alternative route through the network after occurrence of a failure while the protection mechanism uses dedicated protections paths already available in the network so that switch-over from active to protection resources in the case of a failure occurs under the sole control of the affected network element(s).

A very familiar technique is protection, where traffic is sent on a primary path or connection while an additional secondary path or connection, respectively, is prepared to carry the protected traffic in case of disruption of the primary path/connection. Several protection schemes are known today: 1+1 protection means that the protected traffic is duplicated and transmitted in parallel over the primary and the protection path/connection. This protection type is inherently fast, because the receiving egress node can switch instantly to the signal of the secondary path/connection if a degradation of the primary signal is detected. In the 1:1 protection, the secondary path can optionally carry low priority traffic that is dropped in the case of a failure to re-route the failed traffic over the secondary path/connection. Another scenario is called 1:N or M:N protection, where N primary connections share 1 or M (M<N) protection connections, respectively. In the latter protection scheme, network capacity is deployed more efficiently at the cost of reduced security. 1:1, 1:N, and M:N protection require a protocol to signal failure conditions from sink to source and synchronize switch-over from active to protection resources.

In existing and future telecommunication networks, resilience will be an issue of increasing importance. Particularly, traffic belonging to service classes of high priority needs to be safeguarded against failure of one or more network elements or network links.

It is thus an object of the present invention to provide a more flexible protection scheme that allows to protect high priority traffic efficiently where needed while still allowing economic use of resources.

### Summary of the Invention

These and other objects that appear below are achieved by a method of protecting traffic in a telecommunications network, which distributes the protection of different traffic streams in a way, that low priority traffic is protected by means of equipment with less capacity and/or higher outage probability and vice versa. A primary network path or connection carries at least M traffic streams with M>1, wherein each of the M traffic streams belongs to a different service class having a different priority. The primary network path or connection is protected by at least M rather than only 1 redundant protection paths or connection, which are ranked according to their capacity and/or reliability. In the case of a failure of the first network path/connection, the M traffic streams are redirected over the M redundant network paths/connections in a way that traffic streams with a higher service class are carried by redundant network paths or connection with higher rank and traffic streams with a lower service class are carried by redundant network paths or connections with lower rank.

This opens network and service providers the ability to offer services and related reliability/redundancy levels at higher granularity. Further advantages are the more efficient use of network resources exhibiting various levels of capacity and reliability and the higher granularity of service tariffs in terms of CoS (class of services), QoS (quality ofservice), and degree of protection, which can be offered by network carriers and service providers.

Furthermore, such an M: 1 protection will help to use differing network resources more economically. For instance, traffic engineering can be done, where the number of hops between nodes can be optimised independently for different CoSs/priorities. On the other hand, protection paths could also be shared for multiple traffic streams which have to be protected and require similar bandwidth and reliability. The invention is particularly suited to protect IP traffic in a transmission network.

Another aspect of the present invention is a network management system which is adapted and programmed to rank network paths according to their capacity and/or reliability and to configure protection paths for a network path that carries traffic streams of different priorities in a way that traffic streams with a higher service class are carried by redundant network paths with higher rank and traffic streams with a lower service class are carried by redundant network paths with lower rank. Yet another aspect of the present invention is a network element that allows ranking of network paths and redirecting of traffic streams from a protected network path over redundant network paths in a way that traffic streams with a higher service class are carried by redundant network paths with higher rank and traffic streams with a lower service class are carried by redundant network paths with lower rank.

### Brief Description of the Drawings

Preferred embodiments of the present invention will now be described with reference to the accompanyinq drawings in which
- figure 1: shows a primary path which is protected by means of three redundant paths with different ranks,
- figure 2: shows the network managed by a hierarchical network management system,
- figure 3: shows distributed control of a network using GMPLS, and
- figure 4: shows a GMPLS controlled network with label-switched routers and label switched paths.

### Detailed Description of the Invention

The invention as will be described below is equally applicable to protect physical links in a network, logical connections or entire network paths. The term path will be used for an logical end-to-end connection, the term connection will be used for any physical or logical connection in the network, which can be for example a segment of a path. A logical connection is created between two network elements by switching a traffic signal or predefined fraction thereof through intermediate nodes using a series of physical connections in the network.

The invention proposes a new scenario for protection of one primary path or connection with high transport capacity that carries different traffic streams belonging to various Classes of Service (CoS) having different priorities. The invention is based on the recognition that links and components have strongly varying capacity and/or reliability properties, particularly when a network consists of heterogeneous domains. The invention further recognizes that services may be provided at different service classes or quality of service (QoS) according to the corresponding traffic priority.

A basic idea of the present invention is thus to distribute the protection of different traffic streams belonging to different service classes in a way, that low class/priority traffic is protected by means of equipment with less capacity and/or higher outage probability and vice versa. This is particularly advantageous for access networks, which normally use various transport techniques and a range of equipment with different properties.

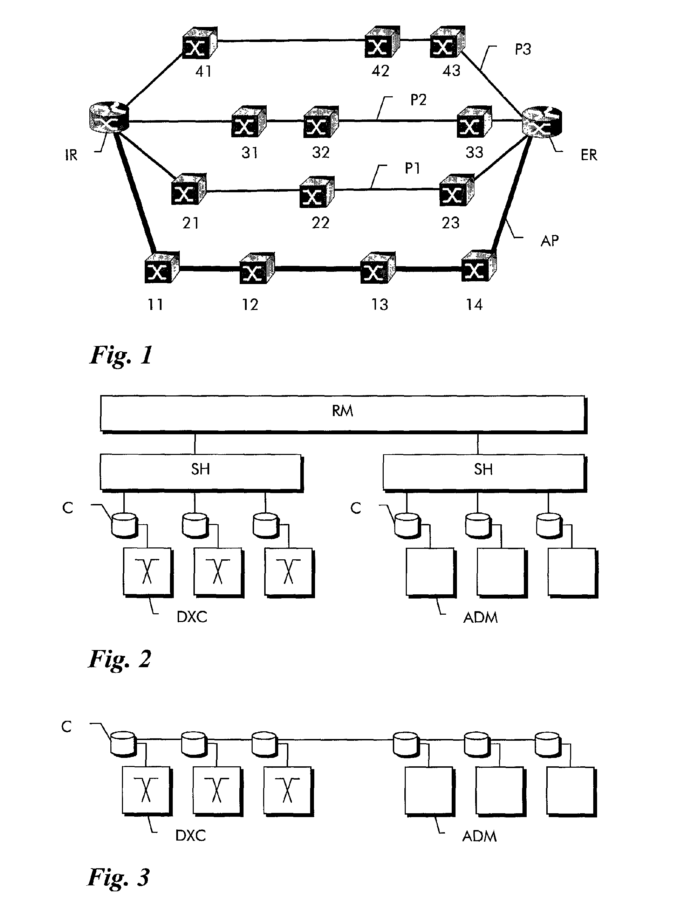

Figure 1 illustrates the situation for three service classes. A transmission network comprises a number of interconnected network elements 11-43. Physical interconnections are not shown in the figure but only established logical connections. An ingress router IR (source) is connected by a primary path AP shown as bold line leading over network elements 11, 12, 13, and 14 to an egress router ER (sink). The primary path carries three signal flows of different priority, i.e., each of these three traffic streams belongs to a different service class.

The primary path AP is protected according to the present invention by three independent secondary or protection paths, P1, P2, and P3, leading over network elements 21-23, 31-33, and 41-43, respectively. Protection path P1 has the highest rank and serves to protect the highest quality traffic signal. Conversely, protection paths P2 and P3 have lower ranks and serve to protect lower priority traffic streams.

The protection paths P2-P3 may be used for unprotected low-priority traffic which will be pre-empted rapidly for protection purposes when a fault occurs on the primary path AP. Such low-priority traffic is also known as extra traffic. It is preferable that the active path AP and the protection paths P1 -P3 use disjoint routes through the network so that a line failure of the primary path would not affect the protections paths. However, some or all protection paths can use some common resources in the network. For instance, two protections paths can join a common link on their route through the network.

The rank of each path depends on criteria such as capacity and reliability. For instance, a path that has a higher outage probability may have a lower rank and a path the carries less traffic may have a higher rank. Further the rank can reflect the recovery delay, i.e., the time the affected network elements require to re-establish the failed traffic over the protection path. For example, a highest priority class traffic will be recovered within 50 ms, while lower priority classes allow recovery delays of 200 ms and 2 s, respectively.

The following service classes are foreseen in the above embodiment:

| CLASS | SERVICE | RECOVERY TIME |
|---|---|---|
| 1 | Platinum | <50 ms |
| 2 | Gold | <200 ms |
| 3 | Silver | ≈2s |
| 4 | Bronze | Best effort |

A recovery time of less than 50 ms can be achieved by permanently bridging the protected traffic to the protection path. The traffic signal is thus transmitted in parallel over active and protection path and the terminating network element can choose the better of the two received signal copies.

A recovery time of less than 200 ms can be achieved by an automatic protection protocol between terminating network elements as is typically used for 1:1 and 1 :N protection schemes. A recovery time of about 2 s can be achieved by network management interaction as is typically used for restoration.

As another reliability criterion, the type of interconnection can be taken into account in the rank of the path. For example, an optical fiber has a higher reliability than a microwave link or a copper cable or network elements with error correction capability have a higher reliability than those without. Yet another reliability criterion is the transmission latency of a particular network element, i.e., the higher the delay a network element introduces, the lower its rank.

Figure 2 shows a typical hierarchical management system of a transmission network. Each network element has its own local controller C which is adapted and programmed to configure its associated network element, to monitor proper functioning of the network element, to receive and evaluate alarm messages and to perform performance monitoring. The local controller has its own local data base that reflects the current configuration of the network element as well as performance monitoring data and alarm status messages.

Two types of network elements are shown by way of example in figure 2, namely crossconnects DXC and add/drop multiplexers ADM. A number of network elements of the same type are controlled by a network management device SH known as element manager. The local controllers report to the associated element manager and receive instructions about how to configure their corresponding network element. The element managers SH are under control of a superordinate regional manager RM, which is responsible for the overall functioning of the entire network.

In a first embodiment of the present invention, the superordinate regional manager RM is responsible to assess and rank the paths and connections in the network and to provide protection paths for a primary path as required. The regional manager knows the topology of the network and can thus evaluate possible alternative paths, rank the paths according to reliability and capacity and configure protections paths to be used in the case of a failure.

Figure 3 shows a distributed control of a transmission network. The controllers C of the various network elements DXC, ADM are connected over network management channels to exchange topology data and connection requests. This approach has recently become more attractive as it allows interoperability of equipment from different vendors. Further, distributed network control allows to configure the network dynamically according to the present traffic requirements, a feature which is known as bandwidth on demand (BonD). A protocol for distributed network management known as GMPLS (generalized multi-protocol label switching) is currently under investigation by ITU-T and IETF and will be available soon.

In a second embodiment of the present invention, use is made of GMPLS protocol to set up protection paths for an existing primary path. The source network element that terminates the primary path receives from external the request to protect the traffic streams contained in the primary path. It then initiates path set-up of the required protection paths by sending out path request for each traffic stream to be protected. Each request indicates the service class of the corresponding traffic stream to be protected, so that the intermediate network elements that receive and forward the request can chose appropriate resources to establish connections of the required rank in the network. When an appropriate protection path is established down to the far end terminating network element, an acknowledgment is sent back to indicate the successful creation of a protection path of the appropriate rank corresponding to the priority of the service class. In particular, the primary and protection paths are created by means of the LDP or RSVP-TE protocol.

Alternatively, the assessment and ranking of the available routes through the network can also be done in the terminating network element that has sent out the path request. This requires that the intermediate nodes send back information about reliability and capacity of the chosen connections. The terminating network element will then rank the entire path according to the reliability and capacity of the constituent connections, assign the paths to the traffic streams to be protected and send out a confirmation for each of the assigned protections paths to initiate actual path set-up.

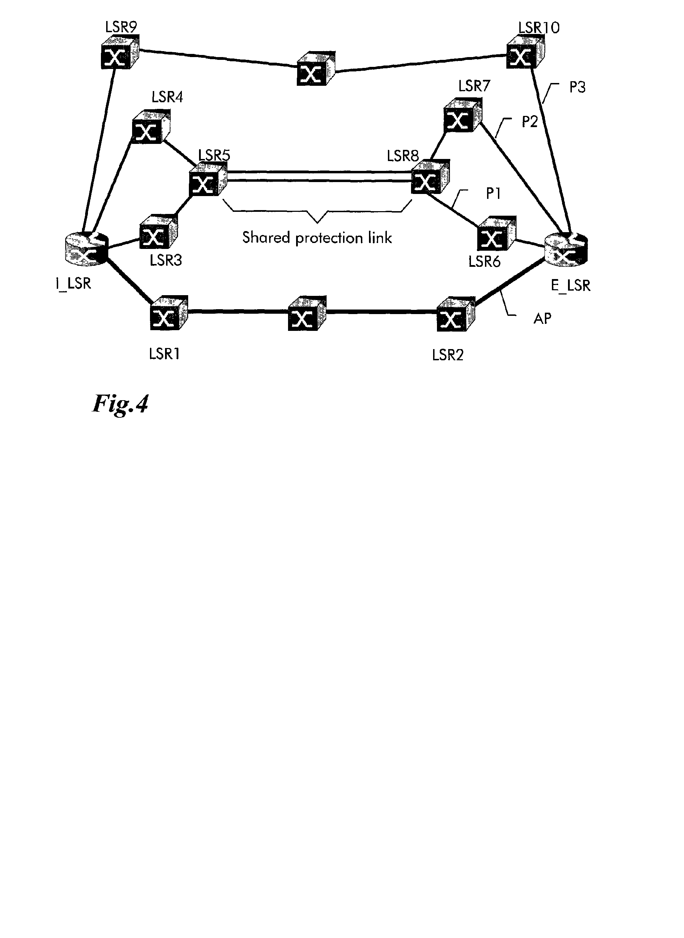

An example of a GMPLS-controlled network with primary and redundant paths is shown in figure 4. A primary path AP is protected by three protection paths P1-P3 having different ranks according to their reliability and capacity. All paths AP, P1-P3 are label switched paths. Ingress router l_LSR and egress router E_LSR as well as intermediate network elements LSR1 -LSR10 are label switched routers, i.e., network elements capable of a label switching protocol such as GMPLS. Figure 4 further shows that part of protection paths P1 and P2 share a common physical link between LSR5 and LSR8.

Having understood the principles of the present invention as described above, it should be clear to those skilled in the art that the invention is not limited to the specific embodiments described and that several modifications are possible.

## Claims

1. A method of protecting traffic in a transmission network, said method comprising the steps of:
- providing a primary connection carrying at least M traffic streams with M> 1, each traffic stream belonging to a different service class;
- providing at least M redundant protection connections, said redundant protection connections being ranked according to their capacity and/or reliability; and
- in the case of a failure of the primary connection, re-direct said M traffic streams over said M redundant protection connections in a way that traffic streams with a higher service class are carried by redundant protection connections with higher rank and traffic streams with a lower service class are carried by redundant protection connections with lower rank.

2. A method according to claim 1 wherein at least part of said redundant connections carry extra traffic during failure-free operation.

3. A method according to claim 1 wherein part of said redundant connections share common protection resources.

4. A method according to claim 1 wherein part of said redundant connections are established using a label switched protocol.

5. A network management system for configuring a transmission network, said system being adapted and programmed
- to initiate connection set-up of a primary connection carrying at least M traffic streams with M> 1, each traffic stream belonging to a different service class; and
- to initiate connection set-up of M redundant protection connections, said redundant protection connections being ranked according to their capacity and/or reliability; said redundant protection connections being provided to carry said M traffic streams in the case of a failure of the primary connection, in a way that traffic streams with a higher service class are carried by redundant protection connections with higher rank and traffic streams with a lower service class are carried by redundant protection connections with lower rank.

6. A network element for a transmission network, said network element comprising a local controller adapted and programmed to control and configure the network element, said controller being further adapted and programmed for distributed connection set-up in the network according to a label switched protocol, said controller being further adapted and programmed
- to initiate connection set-up of at least M redundant protection connections for a predefined primary connection carrying at least M traffic streams with M> 1, each traffic stream belonging to a different service class, said redundant protection connections being ranked according to their capacity and/or reliability,
- and in the case of a failure of said primary connection, to redirect said M traffic streams, in a way that traffic streams with a higher service class are carried by redundant protection connections with higher rank and traffic streams with a lower service class are carried by redundant protection connections with lower rank.

7. A control program for a network management system according to claim 5 or a network element according to claim 6, said program being adapted and programmed to
- to initiate connection set-up of a primary connection carrying at least M traffic streams with M> 1, each traffic stream belonging to a different service class; and
- to initiate connection set-up of M redundant protection connections, said redundant protection connections being ranked according to their capacity and/or reliability; said redundant protection connections being provided to carry said M traffic streams in the case of a failure of the primary connection, in a way that traffic streams with a higher service class are carried by redundant protection connections with higher rank and traffic streams with a lower service class are carried by redundant protection connections with lower rank.
